# EUROPEAN PATENT APPLICATION

(11) **EP 3 903 947 A1**
(43) Date of publication of application: **03.11.2021**
(21) Application number: 20739084.0
(22) Date of filing: 09.01.2020
(51) Int. Cl.: B05C 3/20, B05C 9/14, B05C 13/02, H01G 13/00, H01C 17/00

(54) **PASTE COATING DEVICE**

(30) Priority: 11.01.2019 JP 2019003139
(71) Applicant: Creative Coatings Co., Ltd., Shinjuku Tokyo 162-0842 (JP)
(72) Inventor: SATO, Eiji, Tokyo 162-0842 (JP); SAKAMOTO, Hitoshi, Tokyo 162-0842 (JP)
(74) Representative: Wunderlich & Heim Patentanwälte Partnerschaftsgesellschaft mbB
(86) International application number: PCT/JP2020/000472
(87) International publication number: WO 2020/145348

(57) **Abstract**

A paste coating apparatus (10, 1000) includes a first feeder (30, 30A) that feeds a first belt (20), a mounter (100, 1100) that joins one end portion (2a) of each of a plurality of electronic components (1) to the first belt, a first coater (200, 1200) that coats paste on the other end portion (2b) of each of the plurality of electronic components mounted on the first belt, a first dryer (300, 1300) that dries the paste, a second feeder (50, 50A) that feeds a second belt (40), a transfer device (400, 1400) that transfers the plurality of electronic components from the first belt to the second belt, a second coater (500, 1500) that coats the paste on the one end portion of each of the plurality of electronic components mounted on the second belt, a second dryer (600, 1600) that dries the paste, and a collection device (700, 1700) that winds and collects the second belt.

## Description

### TECHNICAL FIELD

The present invention relates to a paste coating apparatus and the like.

### BACKGROUND ART

The present inventors propose an apparatus and a method to form an external electrode on an electronic component by performing dip coating with a paste, for example, a conductive paste on an end portion of the electronic component, for example, a laminated ceramic capacitor, an inductor, a thermistor, or the like (Patent Documents 1 and 2).

Conventionally, the paste coating apparatus has, for example, a plurality of holes along two orthogonal axes on two-dimensional surfaces of a rubber plate, and coats a paste on a multitude of electronic components at one time by using a jig in which the electronic components are fitted and supported in these holes (Patent Document 2).

In order to improve productivity, adoption of a roll-to-roll method has been frequently proposed in various fields. In any of these proposals, a sheet itself conveyed by the roll-to-roll method is a workpiece to be processed. In other words, various films for the electronic components are formed and laminated on a sheet or a film substrate conveyed by the roll-to-roll method.

### RELATED-ART DOCUMENT

### PATENT DOCUMENT

Patent Document 1: JP-A-2002-237403
Patent Document 2: JP-A-2016-100459

### SUMMARY OF THE INVENTION

### TECHNICAL PROBLEM

The electronic components such as the laminated ceramic capacitors that are objects of the paste coating are micro-sized electronic components individually divided. Therefore, the jig such as the rubber plate described above is used to handle the micro-sized electronic components individually divided. However, it not only requires time but also makes a conveyance mechanism complicated to handle with the jig in conveying the electronic components to each process.

Some aspects of the invention are intended to provide the paste coating apparatus that can markedly improve productivity.

### SOLUTION TO PROBLEM

(1) An aspect of the invention is related to a paste coating apparatus that includes a first feeder that feeds a first belt, a mounter that joins one end portion of each of a plurality of electronic components to the stopped first belt so as to mount the plurality of electronic components on the first belt, a first coater that coats paste on the other end portion of each of the plurality of electronic components mounted on the stopped first belt, a first dryer that dries the paste coated on the other end portion of each of the plurality of electronic components while the first belt is being fed by the first feeder, a second feeder that feeds a second belt, a transfer device that joints, to the second belt, the other end portion of each of the plurality of electronic components having the dried paste at the other end portion, pulls apart the one end portion of each of the plurality of electronic components from the first belt, and then transfers the plurality of electronic components from the first belt to the second belt, a second coater that coats the paste on the one end portion of each of the plurality of electronic components mounted on the stopped second belt, a second dryer that dries the paste coated on the one end portion of each of the plurality of electronic components while the second belt is being fed by the second feeder, and a collection device that collects the second belt.
   According to the aspect of the invention, since the plurality of electronic components are conveyed after jointed to the first belt that is fed by the first feeder or the second belt that is fed by the second feeder, it is not necessary to convey a jig such as a rubber plate. As a result, productivity improves. The first belt fed by the first feeder, to which the one end portion of each of the plurality of electronic components is joined by the mounter, directly conveys the plurality of electronic components. The first coater coats the paste on the other end portion of each of the electronic components joined to the first belt. The first dryer dries the paste coated on the other end portion of each of the electronic components. The transfer device transfers the plurality of electronic components from the first belt to the second belt. The second belt fed by the second feeder, to which the other end portion having the dried paste is joined, directly conveys the plurality of electronic components. The second coater coats the paste on the one end portion of each of the electronic components jointed to the second belt. The second dryer dries the paste coated on the one end portion of each of the electronic components. The second belt in which processing has completed is collected by the collection device. Note that the electronic components may remain jointed to the second belt to be collected, or the second belt after the electronic components are detached may be collected.
(2) In the aspect (1) of the invention, the paste coating apparatus may comprise:
   a first roll that is disposed upstream from the mounter in a first feed direction of the first belt, and on which the first belt has been wound;
   a second roll that is disposed downstream from the transfer device in the first feed direction, and on which the first belt is to be wound;
   a third roll that is disposed upstream from the transfer device in a second feed direction of the second belt, and on which the second belt has been wound; and
   a fourth roll that is disposed in the collection device, and on which the second belt is to be wound. This makes it possible to sequentially convey and process the electronic components for a plurality of batch processes, in which the plurality of electronic components are set for one batch process, by a roll-to-roll method of the first belt and a roll-to-roll method of the second belt.
(3) In the aspect (2) of the invention, there may be provided the paste coating apparatus wherein the first dryer includes:
   a pair of first endless belts that touches a first surface of the first belt at both end portions in a width direction of the first belt;
   a pair of second endless belts that touches a second surface of the first belt at both end portions in the width direction of the first belt;
   at least one first driving roller that rotatably contacts the pair of first endless belts; and
   at least one second driving roller that rotatably contacts the pair of second endless belts. This makes it possible to convey the first belt with both end portions in the width direction of the first belt being sandwiched by the pair of first endless belts and the pair of second endless belts. Consequently, the first belt can be conveyed even when the first belt is cut off at a time of conveyance abnormality. The second dryer can also be configured in the same manner as the first dryer.
(4) In the aspects (1) to (3) of the invention, the paste coating apparatus may be configured by displacing units including a mounting unit in which the mounter is displaced, a first coating unit in which the first coater is displaced, a first drying unit in which the first dryer is displaced, a transfer unit in which the transfer device is displaced, a second coating unit in which the second coater is displaced, a second drying unit in which the second dryer is displaced, and a collection unit in which the collection device is displaced, in the above order. This makes it possible to transportation the apparatus by a unit, thereby saving a transportation space. Also, adjacent units can be jointed at a site by the first belt or the second belt. As a result, assemblability also improves.
(5) In the aspect (4) of the invention, there may be provided the paste coating apparatus, wherein the first feeder includes a first tension roller that is ascended and descended in one of respective two units of the units, the two units are disposed adjacently upstream and downstream in the first feed direction of the first belt; and
   the second feeder may include a second tension roller that is ascended and descended in one of respective two units, of the units, that are disposed adjacently upstream and downstream in the second feed direction of the second belt. This makes it possible to eliminate, by an ascending and descending movement of the first or the second tension roller, deflection or strain of the first belt and the second belt that occurs due to an asynchronous feed or an asynchronous stop of the plurality of electronic components in the two adjacent unites. This enables, for example, an intermittent feed in the first coater and a successive feed in the first dryer because the ascending and descending movement of the first tension roller arranged between the first coater and the first dryer allows the first belt to be stored without being deflected.
(6) In the aspects (1) to (5) of the invention, there may be provided the paste coating apparatus, wherein at least one of the first dryer and the second dryer includes a meandering conveying channel that meanders and conveys at least one of the first belt and the second belt by changing the feed direction thereof by rollers. This makes it possible to dry in a relatively small space while ensuring a drying time. As a result, the apparatus is made smaller.
(7) In the aspects (1) to (6) of the invention, there may be provided the paste coating apparatus, wherein at least one of the first coater and the second coater moves a dip layer of the paste formed on a flat surface arranged on a first surface plate relatively toward the electronic components. This makes it possible to perform a reliable dip coating, which conventionally uses a jig, by using the first and second belts without using the jig.
(8) In the aspect (7) of the invention, there may be provided the paste coating apparatus, wherein at least one of the first coater and the second coater brings a flat surface arranged on a second surface plate into contact with the paste formed on the electronic components by moving the flat surface relatively toward the electronic components so as to flatten the paste. This makes it possible to perform a blotting process to flatten the paste coated on the electronic components.
(9) In the aspects (1) to (8) of the invention, there may be provided the paste coating apparatus, wherein the transfer device includes:
   a suction part that disposes the electronic components between opposing surfaces of the first belt and the second belt so as to suck a different surface from the opposing surface of the second belt;
   a moving apparatus that moves at least one of the first belt and the second belt toward another one so as to join the electronic components to the second belt; and
   a release guide that guides the first belt in such a manner as to release the first belt, which is fed by the first feeder, from the electronic components jointed to the second belt. Thus, the plurality of electronic components conveyed by the first belt are delivered from the first belt to the second belt after the plurality of electronic components are once jointed to both of the first and second belts and then the first belt is released.
(10) In the aspect (9) of the invention, there may be provided the paste coating apparatus, wherein the release guide includes a feed direction changing guide that changes the feed direction of the first belt at an acute angle. In this manner, by changing the feed direction of the first belt at the acute angle, it becomes possible to release the first belt from the plurality of electronic components.
(11) In the aspects (9) or (10) of the invention, there may be provided the paste coating apparatus, wherein a joining force of the second belt is larger than a joining force of the first belt. Thus, it is made easier to transfer the plurality of electronic components from the first belt to the second belt in the transfer device.
(12) In the aspects (1) to (11) of the invention, the plurality of electronic components concurrently mounted on the first belt in the mounter are electronic components for one batch, and different batch IDs may be given to the first belt and the second belt by a unit of the electronic components for one batch. This makes it possible to manage the electronic components jointed to the first belt or the second belt by a unit of a batch.
(13) In the aspect (12) of the invention, the paste coating apparatus may comprise:
   an imager that images at least one of the electronic components for one batch jointed to the first belt and/or the second belt;
   a first ID reader that reads a batch ID of a batch to which the electronic component imaged by the imager belongs; and
   a second ID reader that reads a batch ID of each of the first belt and the second belt that are disposed on the transfer device and on which the electronic components for one batch are transferred. This makes it possible to manage, by the batch IDs read by the first ID reader and the second ID reader, the electronic components for one batch to be determined as good products/defective products on the basis of the imaging results in the imager.
(14) In the aspect (13) of the invention, there may be provided the paste coating apparatus, wherein the collection device includes:
   a third ID reader that reads the batch ID given to the second belt; and
   a component collection part that classifies the electronic components for one batch, which are separated from the second belt and have been determined good or defective on the basis of the imaging results in the imager, into good products or defective products on the basis of the batch ID read by the third ID reader. This makes it possible to classify, into good products/defective products, and collect the respective electronic components for one batch to be determined as good products/defective products on the basis of the imaging results in the imager.
(15) According to another aspect of the invention, there is provided a paste coating apparatus, comprising:
   a feeder that feeds a belt;
   a mounter that joins one end portion of each of electronic components to the stopped belt so as to mount the electronic components on the belt;
   a coater that coats paste on the other end portion of each of the electronic components by moving a dip layer of the paste formed on a surface plate relatively to the electronic components mounted on the stopped belt; and
   a dryer that dries the paste material coated on the other end portion of each of the electronic components while the belt is being fed by the feeder.

   According to another aspect of the invention, since the plurality of electronic components are conveyed after joined to the belt that is fed by the feeder, it is not necessary to use a jig such as a rubber plate. As a result, productivity improves. The belt fed by the feeder, to which the one end portion of each of the plurality of electronic components is joined by the mounter, directly conveys the plurality of electronic components. The coater coats the paste on the other end portion of each of the electronic components joined to the belt. The dryer dries the paste coated on the other end portion of each of the electronic components. Thus, it is possible to coat the paste on the one end portion of each of the plurality of electronic components and dry the paste. In order to coat the paste on the other end portion of each of the plurality of electronic components, the plurality of electronic components may be conveyed again by the belt after jointing, to the belt, the end portion on which the paste is coated.
(16) Yet another aspect of the invention relates to a paste coating apparatus that includes a rotor having a flat surface, a rotation driver that intermittently rotates the rotor, a dip layer forming apparatus that forms the dip layer on the flat surface, a moving apparatus that brings the dip layer formed on the flat surface into contact with the plurality of electronic components by moving the rotor relatively toward the plurality of electronic components jointed to the belt, and a remover that removes the dip layer from the flat surface on which the dip layer brought into contact with the plurality of electronic components is formed.
   According to the paste coating apparatus according to the yet another aspect of the invention, it is possible to sequentially bring the dip layer, which is sequentially formed on the flat surface moved by the rotation driver and the moving apparatus, into contact with the electronic components for a multitude of batch processes that are jointed to the belt and intermittently conveyed.
(17) Yet another aspect of the invention relates to an electronic component transfer device that transfers a plurality of electronic components from a first belt, which is jointed to one end portion of each of the plurality of electronic components and supports the plurality of electronic components, to a second belt that is jointed to another end portion of each of the plurality of electronic components, in which the electronic component transfer device includes a suction part that disposes the plurality of electronic components between opposing surfaces of the first belt and the second belt so as to suck a different surface from the opposing surface of the second belt, a moving apparatus that moves at least one of the first belt and the second belt toward another one so as to join the plurality of electronic components to the second belt, and a release guide that feeds and guides the first belt in such a manner as to release the first belt from the plurality of electronic components jointed to the second belt.
   According to the electronic component transfer device according to the yet another aspect of the invention, the plurality of electronic components conveyed by the first belt are delivered from the first belt to the second belt after the plurality of electronic components are once jointed to both of the first and second belts and then the first belt is released.
(18) Yet another aspect of the invention relates to a belt feed device that feeds a belt having a first surface and a second surface that is on the opposite side to the first surface and in which a plurality of electronic components are jointed to either one of the first surface or the second surface, in which the belt feed device includes a pair of first endless belts that touches the first surface of the belt at both end portions in a width direction of the belt, a pair of second endless belts that touches the second surface of the belt at both end portions in the width direction of the belt, at least one first driving roller that rotatably contacts the pair of first endless belts, and at least one second driving roller that rotatably contacts the pair of second endless belts, and feeds the belt with both end portions of the belt being sandwiched by the pair of first endless belts and the pair of second endless belts. According to the belt feed device according to the yet another aspect of the invention, the belt can be conveyed even when the belt is cut off at a time of conveyance abnormality.
(19) In the yet another aspect (18) of the invention, the pair of first endless belts may be conveyed and guided by concave-convex engagement with the first driving roller, and the pair of second endless belts may be conveyed and guided by concave-convex engagement with the second driving roller. In this manner, the first and second driving rollers can convey the pairs of the first and second endless belts while guiding the pairs without causing the pairs to fall off.
(20) In the yet another aspect (18) or (19) of the invention, a guide roller that contacts the first surface in a central area in the width direction of the belt is further included, and the central area of the first surface of the belt can be a non-jointing area of the plurality of electronic components. This makes it possible to prevent deflection in the central area of the belt.

### BRIEF DESCRIPTION OF THE DRAWINGS

FIG. 1 is a schematic perspective view of the electronic component.
FIG. 2 is a sectional view illustrating various sizes of the electronic component.
FIG. 3 is a schematic explanatory diagram of the paste coating apparatus that is the first embodiment of the invention.
FIG. 4 is a diagram illustrating the rollers contacting both end portions in the width direction of the belt.
FIG. 5 is a perspective diagram of the first and second coaters.
FIG. 6 is a diagram illustrating the rotor and the dip layer forming apparatus arranged in the second coater.
FIG. 7 is a sectional view of the dip layer forming apparatus.
FIG. 8 is a schematic explanatory diagram of the transfer device.
FIG. 9 is a plan view of the third and fourth suction parts.
FIG. 10 is a diagram illustrating the operation to pull apart the one end portion of the electronic component from the first belt in the transfer device.
FIG. 11 is a diagram illustrating the operation to join both end portions of the electronic component to the first and second belts in the transfer device.
FIG. 12 is a diagram illustrating the belt conveyance mechanism of the belt arranged in the first dryer.
FIG. 13 is a sectional view of the belt conveyance mechanism of the belt.
FIG. 14 is a partial plan view of the belt conveyance mechanism.
FIG. 15 is a schematic explanatory diagram illustrating the component remover arranged in the collection device.
FIG. 16 is a schematic explanatory diagram of the paste coating apparatus of the second embodiment of the invention.
FIG. 17 is a diagram illustrating the mounter and the first coater illustrated in FIG. 16.
FIG. 18 is a diagram illustrating the first dryer, the transfer device, and the second coater illustrated in FIG. 16.
FIG. 19 is a diagram illustrating the second dryer and the collection device illustrated in FIG. 16.
FIG. 20 is a block diagram of a control system used in the second embodiment of the invention.

### DESCRIPTION OF EMBODIMENTS

In the following disclosure, a large number of different embodiments and examples for implementing different features of the presented subject matter are provided. Certainly, these are merely examples and are not intended to be limiting. Furthermore, in the present disclosure, reference numbers and/or letters may be repeated in various examples. This repetition is for the sake of brevity and clarity and does not itself need to be related to the various embodiments and/or configurations described. Furthermore, when the first element is described as "connected" or "coupled" to the second element, such description includes not only an embodiment in which the first element and the second element are directly connected or coupled to each other but also an embodiment in which the first element and the second element are indirectly connected or coupled to each other with one or more other elements interposed therebetween. In addition, when the first element is described as "moving" toward the second element, such description includes an embodiment of a relative move in which at least one of the first element and the second element moves toward the other.

### 1. Electronic component

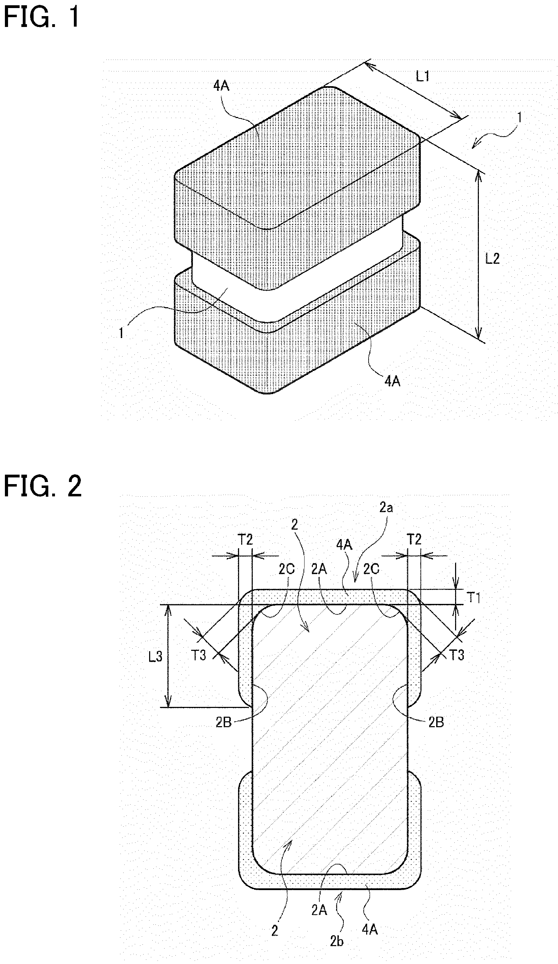

FIG. 1 illustrates an electronic component 1 manufactured by a manufacthuring method according to an embodiment of the invention, and FIG. 2 illustrates a cross-section of a conducting layer 4A formed on the electronic component 1. Here, there is no particular constraint in the size of the electronic component 1 to which the invention is applied, but the invention is suitable for the electronic component 1 that is microminiaturized in accordance with downsizing. As for the microminiaturized electronic component 1, when the maximum length of one side of a cross-section of, for example, a rectangle (a square or a rectangle) as shown in FIG. 1 is L1 and the length in the orthogonal direction to the cross-section of the rectangle is L2, L1 = 500 µm or less and L2 = 1,000 µm or less. Preferably, L1 = 300 µm or less and L2 = 600 µm or less. More preferably, L1 = 200 µm or less and L2 = 400 µm or less. Further more preferably, L1 = 125 µm or less and L2 = 250 µm or less. Note that the rectangle as used herein includes an approximate rectangle in which a corner is curved or chamfered, in addition to a rectangle in which a corner where two sides thereof are crossed is exactly 90°. Note that obviously, the invention is also applicable to the electronic component 1 that has a cross-section having a shape other than a rectangle.

In FIG. 2, an electrode 4A made of a conductive paste layer is formed on an end portion 2 of the electronic component 1 that includes one end portion 2a and the other end portion 2b. The end portion 2 of the electronic component 1 includes an end face 2A, a side face 2B, and a corner portion 2C that connects the end face 2A and the side face 2B. A substantially uniform thickness T1 of the electrode 4A formed on the end face 2A and a substantially uniform thickness T2 of the electrode 4A formed on the side face 2B can be substantially T1 = T2. In addition, a thickness T3 of the electrode 4A formed on the corner portion 2C can be T3 ≥ T1 or T3 ≥ T2, or T3 < T1 or T3 < T2. Also, an electrode length of the electrode 4A, which is formed on the side face 2B, from the end face 2A is L3. It is preferable that the sizes of the electrode 4A (T1 to T3 and L3) have uniformity.

### 2. First embodiment

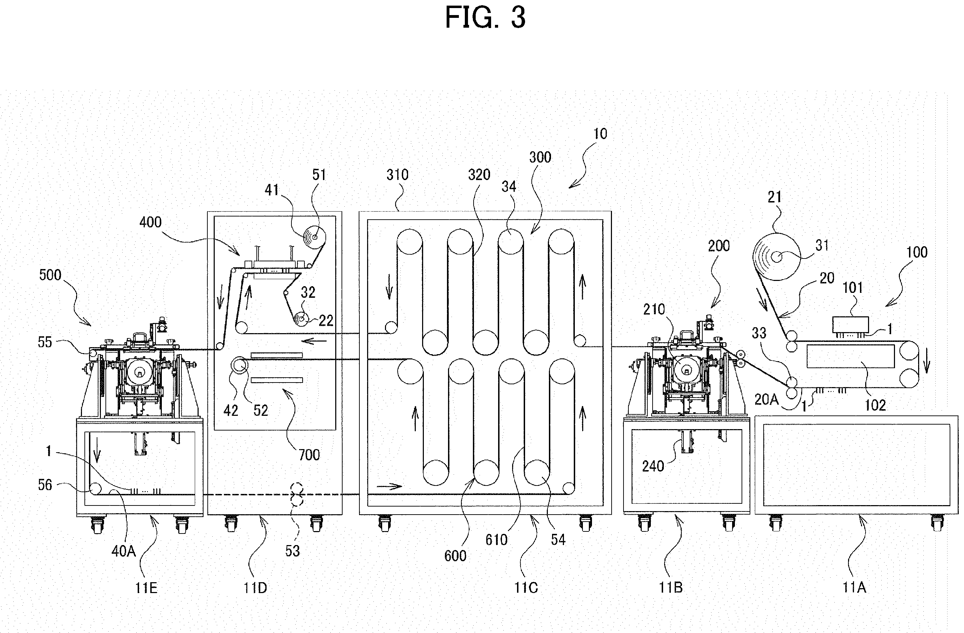

FIG. 3 is a schematic diagram illustrating a paste coating apparatus. In FIG. 3, a paste coating apparatus 10 includes a first device 10A and a second device 10B. The first device 10A is a device that coats, on the other end portion 2b of the electronic component 1 in which the one end portion 2a is joined and supported, and dries a conductive paste. The second device 10B is a device that coats, on the one end portion 2a of the electronic component 1 in which the other end portion 2b is joined and supported, and dries the conductive paste. In other words, the paste coating apparatus 10 can coat, on both of the end portions 2a, 2b of the electronic component 1, and dry the conductive paste.

The paste coating apparatus 10 has a first feeder 30 that, for example, intermittently feeds a first belt 20 as a belt-shaped member, for example, by a roll-to-roll method and a second feeder 50 that, for example, intermittently feeds a second belt 40 as a belt-shaped member, for example, by the roll-to-roll method. The paste coating apparatus 10 can include a first roller 31, a second roller 32, a third roller 51, and a fourth roller 52. The first belt 20, which the electronic component 1 has not yet joined to, is wound on the first roller 31. The first belt 20, which the electronic component 1 has been once joined to and released from, is wound on the second roller 32. The first feeder 30 includes a plurality of driving and driven rollers that feed and/or guide the first belt 20 from the first roller 31 to the second roller 32. The second belt 40, which the electronic component 1 has not yet joined to, is wound on the third roller 51. The second belt 40, on which a plurality of electronic components 1 after completion of coating and drying processing have been mounted, is wound on the fourth roller 52. The second feeder 50 includes a plurality of driving and driven rollers that feed and/or guide the second belt 40 from the third roller 51 to the fourth roller 52. The second and fourth rollers 32, 52 can be driving rollers. Driving rollers other than the second and fourth rollers 32, 52 can include a tension roller that drives the first and second belts 20, 40 and imparts tension to the first and second belts 20, 40. Note that the first or the second belt 20, 40 wound on the first to fourth rollers 31, 32, 51, 52 are referred to as first to fourth rolls 21, 22, 41, 42. In the present embodiment, the first belt 20 is conveyed between the first and second rolls 21, 22 by the roll-to-roll method. Likewise, the second belt 40 is conveyed between the third and fourth rolls 41, 42 by the roll-to-roll method.

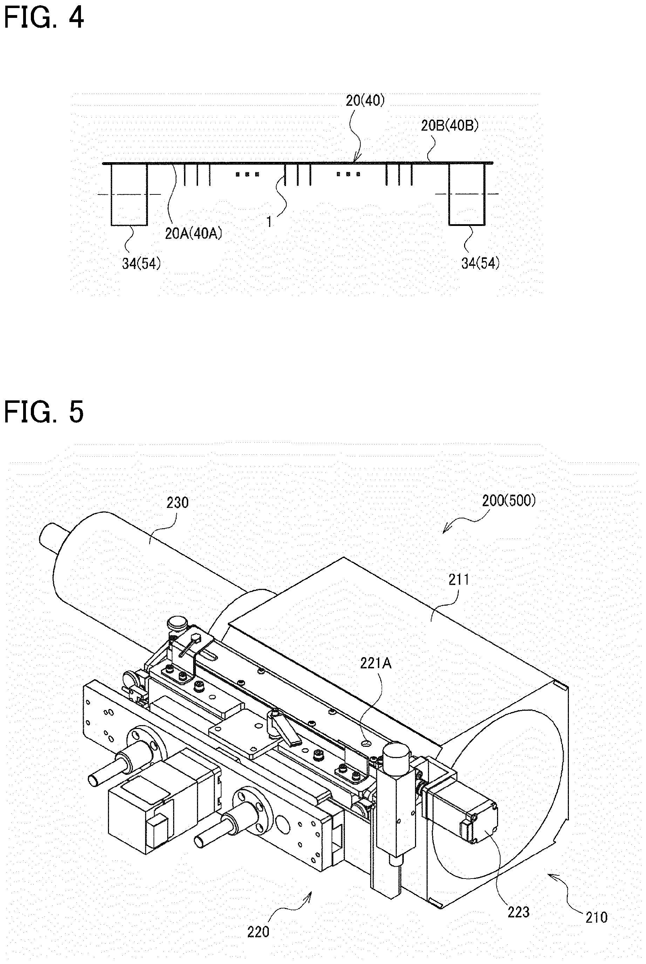

Here, as illustrated in FIG. 4, one sides 20A, 40A of the first and second belts 20, 40 are joining surfaces on which the end portions 2a, 2b of the electronic component 1 can be joined by adhesion or cohesion. The first and second belts 20, 40 may or may not have mounts (release paper) stacked on the joining surfaces 20A, 40A. When the first and second belts 20, 40 have the mounts, the mounts are released while the first and second belts 20, 40 are being fed. Note that the rollers rotatably contact the first and second belts 20, 40 are either rollers 33, 53 (FIG. 3) that come into contact with other surfaces (non-joining surfaces) 20B, 40B on which the electronic component 1 is not joined so as not to interfere with the electronic component 1, or rollers 34, 54 that come into contact with both end portions in the width direction in either the joining surfaces 20A, 40A or the non-joining surfaces 20B, 40B of the first and second belts 20, 40 as illustrated in FIG. 4. The rollers that come into contact with the joining surfaces 20A, 40A can have roller surfaces that are not jointed or not easily joined by an adhesive agent or a cohesive agent on the joining surfaces 20A, 40A. Alternatively, the adhesives agent or the cohesive agent may not be formed in an area of the first and second belts 20, 40 where the rollers come into contact.

The first device 10A of the paste coating apparatus 10 has a mounter 100, a first coater 200, a first dryer 300, and a transfer device 400 along a movement path of the first belt 20 that is fed by the first feeder 30. The second device 10B of the paste coating apparatus 10 has a transfer device 400, a second coater 500, a second dryer 600, and a collection device 700 along a movement path of the second belt 40 that is fed by the second feeder 50.

Here, in the embodiment, the paste coating apparatus 10 can be configured by coupling a mounting unit 11A, a first coating unit 11B, a drying unit 11C, a transfer/collection unit 11D, and a second coating unit 11E in this order. This makes it possible to disintegrate the apparatus into each unit for transportation, and couple the units by an unillustrated coupling means at a site. In this case, the mounter 100 is disposed in the mounting unit 11A, the first coater 200 is disposed in the first coating unit 11B, and the second coater 500 is disposed in the second coating unit 11B. The first dryer 300 and the second dryer 600 are disposed in the drying unit 11C. The first dryer 300 and the second dryer 600 can be disposed in a common drying chamber. Thereby, a heat source for drying can be shared by the first dryer 300 and the second dryer 600. The transfer/collection unit 11D has a transfer device 400 and a collection device 700. The electronic component 1 dried in the second dryer 600 can be collected in the shortest time by disposing the collection device 700 next to the second dryer 600.

### 2.1 Mounter

The mounter 100 vertically arranges and mounts the plurality of electronic components 1 on the first belt 20 after joining one end portion 2a of each of the plurality of electronic components 1 to the first belt 20 that is stopped intermittently. As illustrated in FIG. 3, the mounter 100 has a jig 101 made of rubber, for example, on which a multitude of holes are formed as in the jig illustrated in Patent Document 2. The jig 101 can be ascended and descended. The mounter 100 can include a base, for example, a vacuum-suck part 102 that is opposed to the jig 101 across the first belt 20. The vacuum-suck part 102 is, for example, fixed at a slightly downward position of a travelling path of the first belt 20. The first belt 20 fed from the first roll 21 is stopped and sucked by the vacuum-suck part 102. Subsequently, the jig 101 is descended (in a wider sense, a relative movement with the first belt 20 and the vacuum-suck part 102). Thereby, the one end portion 2a of the electronic component 1 projected from the jig 101 is joined to the first belt 20. Subsequently, the jig 101 is ascended, and the suction by the vacuum-suck part 102 is canceled. In this manner, the plurality of electronic components 1 are vertically arranged and mounted on the first belt 20. Note that another jig for alignment (not illustrated) may be used to dispose the plurality of electronic components 1 on the jig 101. The alignment jig has tapered holes at an opening, and the electronic components 1 in a non-aligned state are disposed on the holes of the alignment jig by vibration or other techniques. This alignment jig can be reversed to simultaneously transfer the plurality of electronic components 1 to the jig 101. Note that unlike FIG. 3, the jig 101, which aligns and supports the electronic components 1 such that the electronic components 1 are projecting upwardly, may be ascended from the lower part of the first belt 20 so that the plurality of electronic components 1 are mounted on the first belt 20. As illustrated in FIG. 3, in the mounter 100, the first belt 20 is reversed by a roller and fed in such a manner as to suspend and support the electronic components 1.

This mounting operation is performed every time the first belt 20 is intermittently stopped. At the time of one stop, for example, few hundreds to tens of thousands of the electronic components 1 for one batch are mounted on the first belt 20. FIG. 3 illustrates the electronic components 1 in a plurality of columns, and the electronic components 1 in a plurality of rows are disposed in each column. Hence, the electronic components 1 for one batch are made up of the electronic components 1 in the plurality of rows and the plurality of columns. The mounting operation is repeated every intermittent stop of the first belt 20, and the electronic components 1 for a plurality of batches are fed by the first belt 20.

### 2.2 First coater

The first coater 200 coats the paste on the end portion 2b of each of the plurality of electronic components 1 mounted on the first belt 20 that is intermittently stopped. The first coater 200 causes the end portions 2b of the plurality of electronic components 1 supported on the first belt 20 to be dipped in a dip layer of the paste formed on a flat surface. To this end, as illustrated in FIG. 5, the first coater 200 has a rotor 210 having a flat surface 211, and a dip layer forming apparatus 220 that forms, on the flat surface 211, the dip layer made of the paste. The rotor 210 can have the flat surfaces 211, for example, on the four sides thereof, and rotate the flat surfaces 211 intermittently by a rotation angle 90° with a rotation driver, for example, a motor 230.

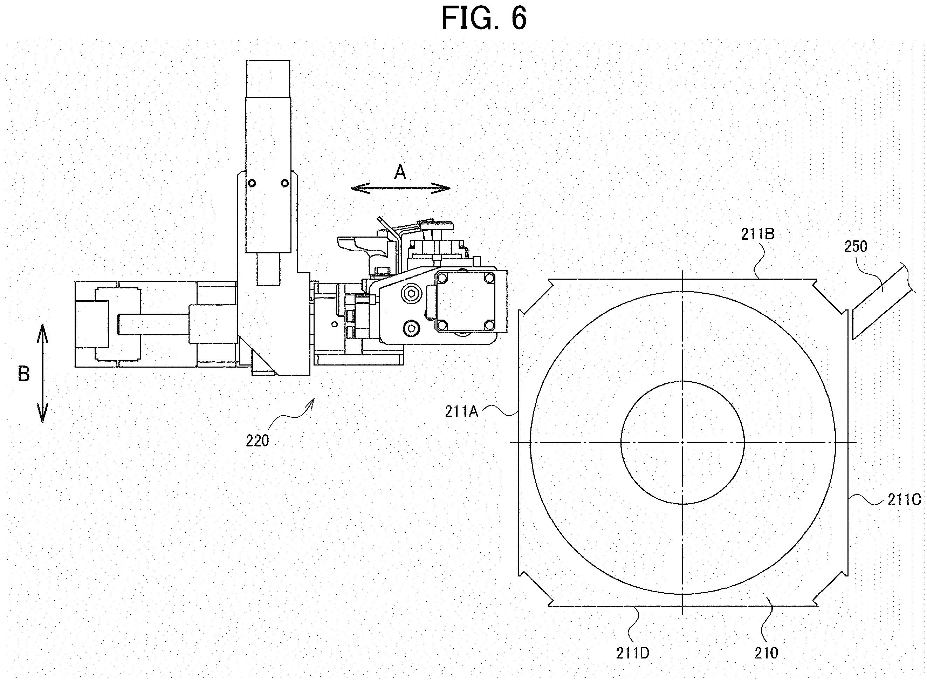

The first coater 200 causes the plurality of electronic components 1 supported on the first belt 20 to be dipped in the dip layer formed on the flat surface 211. To this end, as illustrated in FIG. 1, the first coater 200 has a first moving apparatus, for example, an air cylinder 240 that ascends and descends the rotor 210. Note that the first moving apparatus may be any moving apparatus that relatively moves the first belt 20 and the rotor 210. Here, for convenience of illustration, the flat surfaces on the four sides of the rotor 210 are referred to as 211A to 211D as illustrated in FIG. 6. As illustrated in FIG. 6, the dip layer forming apparatus 220 forms the dip layer on the flat surface 211A. The dip layer formed on the flat surface 211B after 90° rotation of the flat surface 211A forms a paste layer at the end portions 2b of the plurality of electronic components 1 when the rotor 210 is descended after ascended. The dip layer remaining on the flat surface 211C after 90° rotation of the flat surface 211B is scratched and removed by a blade 250 that is a paste remover. The paste removal may be performed not at a position of the flat surface 211C but at a position of the flat surface 210D after 90° rotation of the flat surface 211C. In this manner, the paste layer can be sequentially formed on the electronic components 1 for a multitude of batch processes by moving the dip layer, which is formed on the flat surface 211 by the dip layer forming apparatus 220, by the rotation driver 230 and the first moving apparatus 240.

Note that the rotor 210 may be rotated in a backward direction. For example, the flat surface 211C from which the dip layer has been removed may be rotated in the backward direction by 90°. A blotting process may be performed in which the flat surface 211C is ascended and brought into contact with the paste layers formed in the end portions 2b of the plurality of electronic components 1 so as to be flattened. At this time, the electronic component 1 and the flat surface 211C may be moved in a relatively horizontal manner while keeping the paste layer and the flat surface 211C of the electronic component 1 in contact.

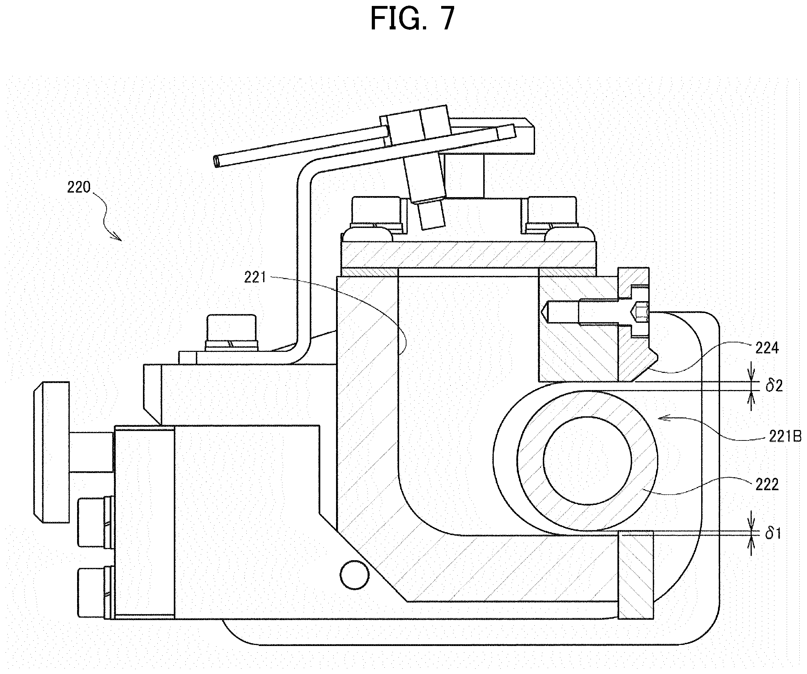

Next, the dip layer forming apparatus 220 will be described also with reference to Fig. 7. As illustrated in FIG. 7, the dip layer forming apparatus 220 has, for example, a paste housing 221 having an opening 221B at a bottom end of a L-shaped hollow. The paste is supplied from an unillustrated paste supply part through a supply orifice 221A illustrated in FIG. 5. A residual quantity sensor that detects a quantity of the paste in the paste housing 221 may be arranged so that the paste is automatically supplied to the paste housing 221 on the basis of the detection result of the residual quantity sensor.

A feed roller 222 is arranged at the opening 221B of the paste housing 221. In FIG. 7, the feed roller 222 is rotated counterclockwise, for example, by a motor 223 that is a rotation driver. In this case, a clearance between the opening 221B and the feed roller 222 of the paste housing 221 and at a paste supply side arranged at a lower side of the feed roller 222 is δ1. When the feed roller 222 is rotated, a paste layer having a thickness of substantially δ1 is formed on a surface of the feed roller 222 that is exposed to outside. This paste layer formed on the feed roller 222 is transferred to the flat surface 211 of the rotor 210 and becomes the dip layer. On the other hand, a clearance between the opening 221B and the feed roller 222 of the paste housing 221 and at a paste supply side arranged at an upper side of the feed roller 222 is δ2. The relationship between δ1 and δ2 is preferably δ1 < δ2. A blade 224 having a downwardly inclined surface is disposed in an upper part of the clearance δ2. The blade 224 scrapes excessive paste of the dip layer formed on the flat surface 211A of the rotor 210 illustrated in FIG. 6 and guides the excessive paste to the clearance δ2. Paste other than the dip layer formed on the flat surface 211A of the rotor 210 illustrated in FIG. 6 is collected through the clearance δ2 in the paste housing 221.

As illustrated in FIG. 6, the dip layer forming apparatus 220 not only horizontally reciprocates in a direction of an arrow A but also vertically reciprocates in a direction of an arrow B. First, the dip layer forming apparatus 220 horizontally moves to bring the paste layer formed on the feed roller 222 into contact with the flat surface 211A of the rotor 210 illustrated in FIG. 6. Subsequently, the dip layer forming apparatus 220 is moved vertically downward while the feed roller 222 is rotationally moved. Thereby, the paste layer formed on the feed roller 222 can be transferred to the flat surface 211A of the rotor 210 illustrated in FIG. 6.

### 2.3 First dryer

As illustrated in FIG. 3, the first dryer 300 has the drying chamber 310 disposed in the drying unit 11C, for example. The drying chamber 310 is heated to a temperature that dries the paste, for example, 130C° by an unillustrated heating source. In the embodiment, the drying chamber 310 is shared by the first and second dryers 300, 600. The first dryer 300 is disposed, for example, at an upper part of the drying chamber 310, and the second dryer 600 is disposed, for example, at a lower part of the drying chamber 310. The paste coating apparatus 10 is thereby made smaller. The first dryer 300 can include a meandering conveying channel 320 that meanders and intermittently conveys the first belt 20 by changing a feed direction of the first belt 20 with a plurality of rollers as illustrated in FIG. 3. This makes it possible to dry in a relatively small space while securing a drying time. As a result, the drying chamber 310 is made smaller. The first dryer 300 dries the paste layer formed on the electronic component 1, for example, at 130C°, and for example, for 10 to 30 minutes.

### 2.4 Transfer device

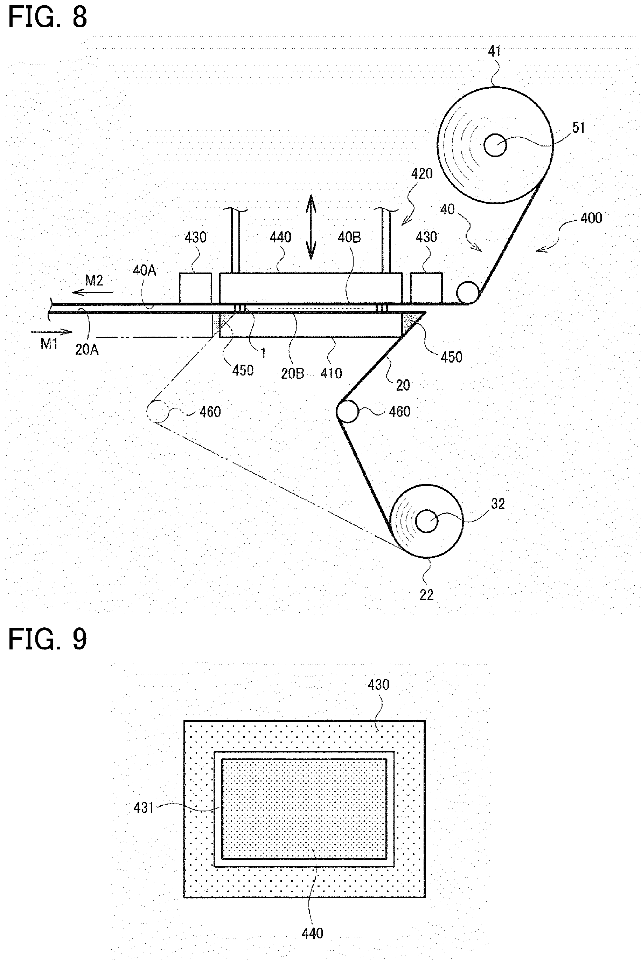

As illustrated in FIG. 8, in the transfer device 400, the first belt 20 and the second belt 40 travel such that the joining surfaces 20A, 40A are opposed to each other. At this time, the plurality of electronic components 1 joined to the first belt 20 are located between the opposing surfaces 20A, 40A of the first belt 20 and the second belt 40. In the embodiment, a first feed direction M1 of the first belt 20 and a second feed direction M2 of the second belt 40 in the transfer device 400 are, for example, opposite to each other. The transfer device 400 includes a first suction part 410 and a second suction part 420 that suck the respective surfaces 20B, 40B that are different from the opposing surfaces 20A, 40A of the first belt 20 and the second belt 40, respectively. The first suction part 410 and the second suction part 420 are relatively movable, and in the embodiment, the second suction part 420 can be ascended and descended by an unillustrated second moving apparatus configured by an air cylinders or the like. By descending the second suction part 420 with the second moving apparatus, the end portion 2b of the electronic component 1 is joined to the joining surface 40A of the second belt 40. At this time, the first belt 20 is preferably sucked by the first suction part 410. Also, though the paste layer is formed at the end portion 2b of the electronic component 1 that is joined to the second belt 40, this paste layer does not hinder the joining operation because the paste layer has already been dried.

The second suction part 420 can preferably include a third suction part 430 and a fourth suction part 440. The third suction part 430 sucks the second belt 40 in an upstream and a downstream of the plurality of electronic components 1 for one batch mounted on the second belt 40 in the second feed direction M2. In the embodiment, as illustrated in FIG. 9, the third suction part 430 is formed in a square frame in a plane vision. Therefore, the third suction part 430 can suck the second belt 40 over the entire circumference of the mounting area of each of the plurality of electronic components 1 for one batch. The fourth suction part 440 is disposed in an opening 431 that is formed by the third suction part 430 in the shape of the square frame. As illustrated in FIG. 9, the fourth suction part 440 can suck the second belt 40 at the back side of the mounting area of each of the plurality of electronic components 1 for one batch. Note that in the unillustrated second moving apparatus, both of the third suction part 430 and the fourth suction part 440 may be ascendible and descendible or the fourth suction part 440 may be ascendible and descendible. While the second belt 40 is sucked and fixed by the third suction part 430, the second belt 40 can be pressed toward the first belt 20 by the fourth suction part 440. Thereby, the plurality of electronic components 1 can be joined to the second belt 40. The fourth suction part 440 can, in the descending position thereof, suck the second belt 40 at the position of the back side of each of the mounting area of the plurality of electronic components 1.

The transfer device 400 can include a release guide 450 that moves and guides the first belt 20 in such a manner as to release the first belt 20 from the plurality of electronic components 1 for one batch that are joined to the second belt 40. In this manner, the plurality of electronic components 1 conveyed by the first belt 20 are once joined to both of the first belt 20 and the second belt 40, and then delivered from the first belt 20 to the second belt 40 when the first belt 20 is released.

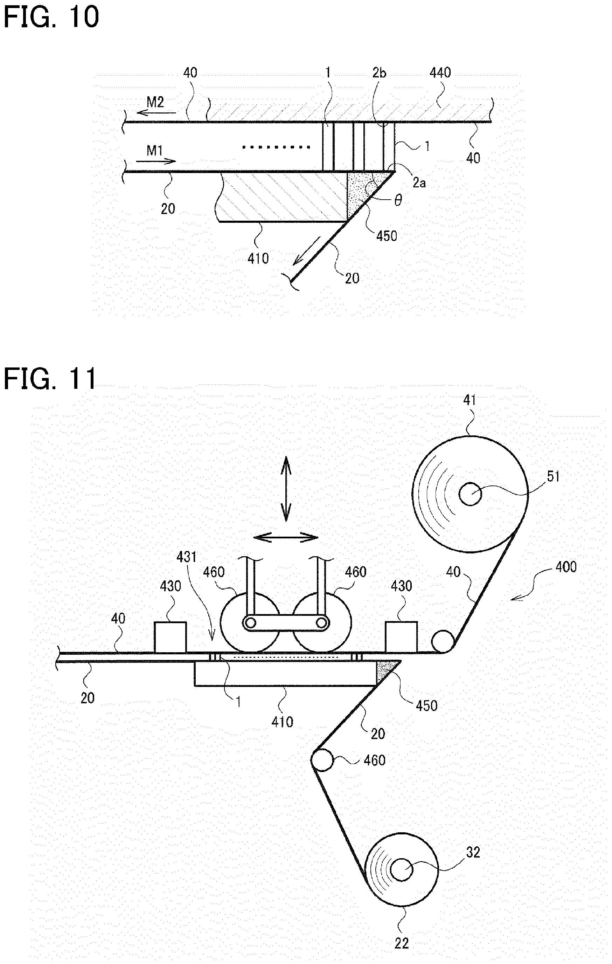

An example of the operation by the release guide 450 will be described with reference to FIGS. 8 and 10. As illustrated in FIG. 10, the release guide 450 can include a feed direction changing guide that is fixed at the downstream side of the first feed direction M1 of the first suction part 410 and suddenly changes the feed direction of the first belt 20 at an acute angle of θ. In this manner, by changing the feed direction of the first belt 20 at the acute angle, it becomes possible to release the first belt 20 from the plurality of electronic components 1. The first belt 20, from which the plurality of electronic components 1 have been removed, is wound on the second roller 32, and becomes a part of the second roll 22.

The release guide 450 causes the plurality of electronic components 1 in respective rows illustrated in FIG. 10 to be sequentially released from the first belt 20. To this end, the release guide 450 is first set at a position corresponding to the electronic components 1 in the first row as illustrated in FIG. 10, and then is set at a position corresponding to the electronic components 1 in and after the second row as shown by a chain line in FIG. 8. In this manner, the electronic components 1 in each row and the release guide 450 are relatively moved. In the embodiment, the release guide 450 is moved together with the first suction part 410 and the moving roller 460 in a direction opposite to the first feed direction M1. At this time, the first belt 20 is synchronized with the movement of the release guide 450 and continuously or intermittently fed. When the first belt 20 is fed, the suction operation by the first suction part 410 is unnecessary. However, the first suction part 410 may perform the suction operation as long as no problem is caused in the feed operation of the first belt 20. On the other hand, it is preferable that the second belt 40 is not fed, and the second belt 40 is sucked by the second suction part 420 (the third suction part 430 and the fourth suction part 440). When the first belt 20 is released from the electronic components 1 in the final row, the release guide 450 is returned to an initial position together with the first suction part 410. Then, the release operation is completed.

In order to join the electronic components 1 for one batch more securely to the second belt 40, the transfer device 400 can include the rollers 460 that are pressing members illustrated in FIG. 11. The rollers 460 are disposed at the opening 431 formed by the third suction part 430 in the shape of the square frame. This enables the fourth suction part 440 to be retreated from the opening 431. The roller 460 presses the second belt 40 at a position of the back side 40B of the joining surface 40A to which the electronic components 1 for one batch are joined. The rollers 460 can be horizontally reciprocated. This makes it possible to increase adhesiveness between the electronic components 1 for one batch and the second belt 40. Subsequently, the fourth suction part 440 can be disposed at the opening 431 in a manner as illustrated in FIG. 8.

### 2.5 Second coater

The second belt 40 is supplied from the transfer device 400 to the second coater 500. The second coater 500 coats the paste on the end portions 2a of the electronic components 1 for one batch supported by the second belt 40. As the configuration and the operation for this paste coating are the same as those of the first coater 200, the detailed description thereof will be omitted. As illustrated in FIG. 3, a feed direction of the second belt 40 is changed by rollers 55, 56 and the like arranged at the second coater 500, and the second belt 40 is fed to the drying unit 11C via a lower space of the second coating unit 11E and the transfer/collection unit 11D.

### 2.6 Second dryer

As illustrated in FIG. 3, the second dryer 600 can include a meandering conveying channel 610 that changes the feed direction of the second belt 40 with a plurality of rollers to meander and intermittently convey the second belt 40. This makes it possible to dry the paste coated on the end portions 2a of the electronic components 1 for the plurality of batches.

### 2.7 Collection device

As illustrated in FIG. 3, the collection device 700 is configured by disposing the fourth roller 52, for example, below the transfer device 400 of the transfer/collection unit 11D. The second belt 40 on which the electronic components 1, on which the paste layers have been formed at both of the end portions 2a, 2b thereof, are mounted is wound on this fourth roller 52, and is collected as the fourth roll 42. Alternatively, as described below, the electronic components 1 may be separated from the second belt 40 before winding the second belt 40 on the fourth roller 52 so as to be collected.

### 3. Modifications

Although the embodiment has been described in detail above, note that those skilled in the art would readily appreciate that many modifications are possible without materially departing from the novel teachings and advantages of the invention. Accordingly, such modifications are all intended to be included within the scope of the invention. For example, any term cited with a different term having a broader meaning or the same meaning at least once in the specification and the drawings can be replaced by the different term in any place in the specification and the drawings. Also, all combinations of the embodiment and the modifications are within the scope of the invention.

### 3.1 Apparatus for coating paste to one end portions of electronic components

In the embodiment described above, the paste coating apparatus 10 is a double-sided electrode forming apparatus that includes the first device 10A and the second device 10B in order to coat, to both of the end portions 2a, 2b of the electronic component 1, and dry the conductive paste. The invention is not limited to this, and may be a single-sided electrode forming apparatus that is configured by only one of the first device 10A and the second device 10B that coats, on either one of the end portions 2a, 2b of the electronic component 1, and dries the conductive paste. In this case, the single-sided electrode forming apparatus can be configured by including, for example, the mounter 100 included in the first device 10A, the first coater 200, the first dryer 300, and a collection device that is arranged in place of the transfer device 400. The collection device only needs to have the second roller 32. In this single-sided coating apparatus, after the conductive paste is coated and dried on the end portion 2a of the electronic component 1, the second roll 22 collected by the collection device may be mounted again as the first roll 21 in the mounter 100. Thereby, the conductive paste can also be coated and dried on the end portion 2b of the electronic component 1.

### 3.2 Conveyance mechanism of belt

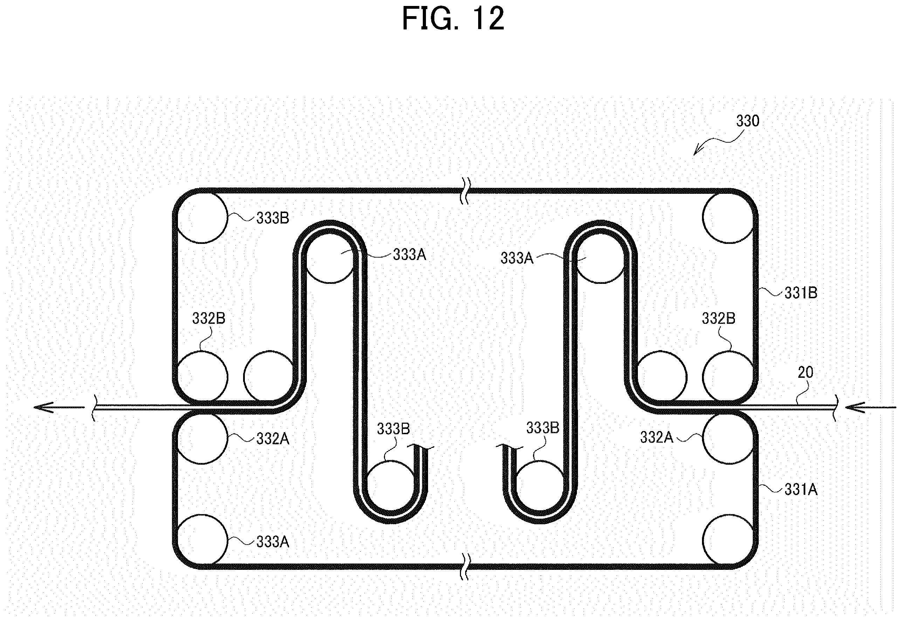

The feed drive device of the belt is not limited to the combination of any ones of a driving roller, a driven roller, or a tension roller. FIGS. 12 to 14 illustrate a belt conveyance mechanism 330 that can be arranged in at least one of the first and second dryers 300, 600, for example, in at the first dryer 300 of Fig. 3. This belt conveyance mechanism 330 is adopted in the meandering conveying channel 320 of FIG. 3.

As illustrated in FIG. 12, the belt conveyance mechanism 330 includes a pair of first endless belts 331A and a pair of second endless belts 331B. The pair of first endless belts 331A is extended over at least one first driving rollers 332A and a plurality of driven rollers 333A. The pair of second endless belts 331B is also extended over at least one second driving roller 332B and a plurality of driven rollers 333B.

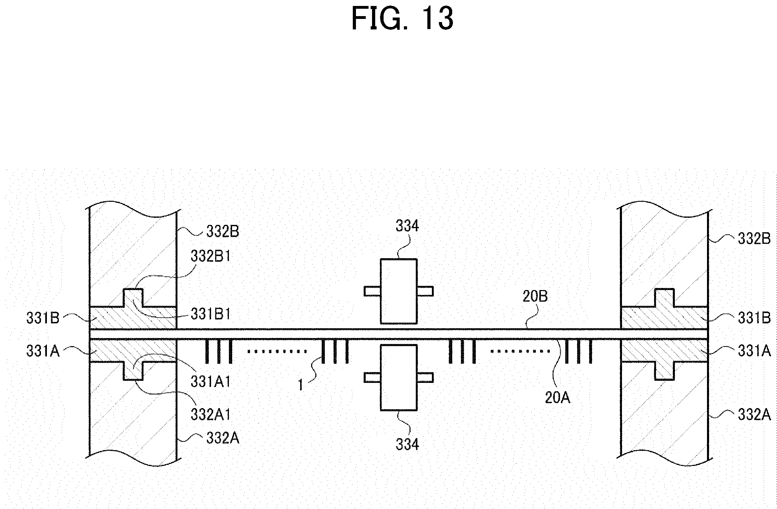

As illustrated in FIG. 13, the pair of first endless belts 331A touches the joining surface (the first surface) 20A of the first belt 20 at both end portions in the width direction of the first belt 20. The pair of second endless belts 331B touches the non-joining surface (the second surface) 20B of the first belt 20 at both end portions in the width direction of the first belt 20. Then, the first belt 20 is fed with both end portions thereof being sandwiched between the pair of first endless belts 331A and the pair of second endless belts 331B. The first and second driving rollers 332A, 332B are driven in sync with other driving rollers in the first feeder 30.

Here, when the conveyance abnormality occurs particularly in the meandering conveying channel 320, the first belt 20 may be cut off so that a measure can be taken against the abnormally. According to the belt conveyance mechanism 330, since the first belt 20 is conveyed with both end portions in the width direction of the first belt 20 being sandwiched, the first belt 20 can be conveyed regardless of being cut off or not. The belt conveyance mechanism can also be disposed in the meandering conveying channel 610 of the second dryer 600.

The pair of first endless belts 331A may be conveyed and guided by concave-convex engagement with the first driving roller 332A, and the pair of second endless belts 331B may be conveyed and guided by concave-convex engagement with the second driving roller 332B. For example, as illustrated in FIG. 13, the pair of first endless belts 331A can have a first guiding rib 331A1 that projects from a surface opposite to a surface that touches the first surface 20A of the first belt 20. In this case, the first driving roller 332A has a first peripheral groove 332A1 that the first guiding rib 331A1 enters. Likewise, the pair of second endless belts 331B can have a second guiding rib 331B1 that projects from a surface opposite to a surface that touches the second surface 20B of the first belt 20. In this case, the second driving roller 332B has a second peripheral groove 332B1 that the second guiding rib 331B1 enters. This allows the first peripheral groove 332A1 of the first driving roller 332A and/or the second peripheral groove 332B1 of the second driving roller 332B to convey and guide the pair of first endless belts 331A and/or the pair of second endless belts 331B without being deviated from the normal conveyance path. The first guiding rib 331A1 and the second guiding rib 331B1 may be formed on the belt continuously or discontinuously. The belt may have a concave structure, and the roller may have a convex structure. A conveyance guide driven roller having a concave-convex structure may be arranged. A belt conveyance mechanism arranged in the second dryer 600 can also be configured in the same manner.

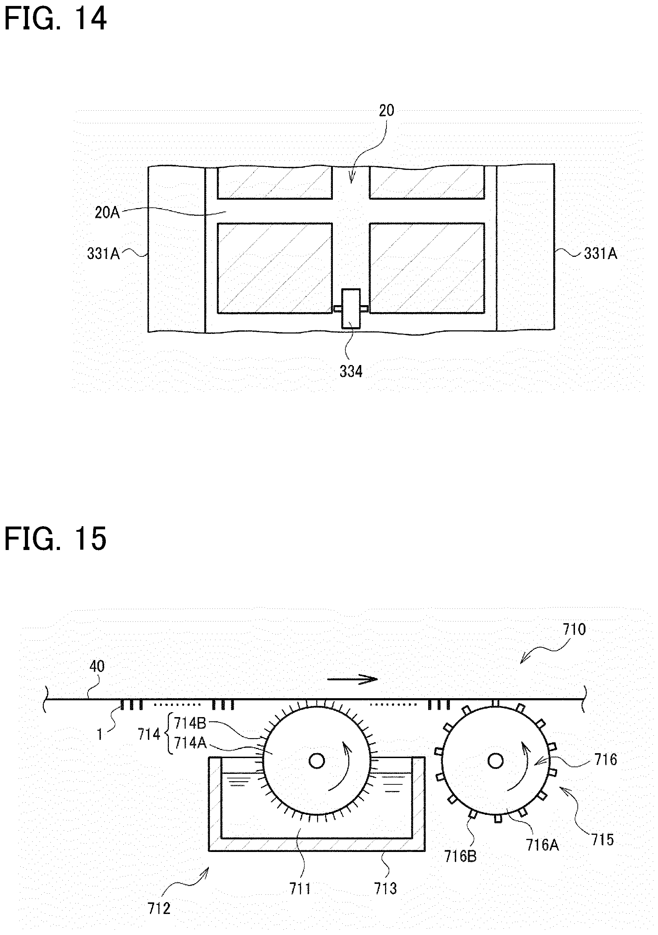

As illustrated in FIG. 14, the belt conveyance mechanism 330 can further have a guide roller 334 that contacts at least one of the first surface 20A and the second surface 20B in a central area in the width direction of the first belt 20. When the guide roller 334 rotatably contacts the first surface 20A, the central area in the width direction of the first belt 20 that contacts the guide roller 334 is a non-joining area of the electronic components 1. For example, hatched areas illustrated in FIG. 14 are joining areas of the electronic components 1. This makes it possible to support the first belt 20 at both end portions in the width direction and a central portion, thereby suppressing deflection. To this end, it is preferable to bring the guide roller 334 into contact with a downward surface of the first belt 20. The belt conveyance mechanism arranged in the second dryer 600 can also be configured in the same manner.

### 3.3 Electronic component separation device disposed in collection device

FIG. 15 illustrates an electronic component separation device 710 that can be disposed in the collection device 700 illustrated in FIG. 3. The electronic component separation device 710 separates, from the second belt 40, the plurality of electronic components 1 jointed to the joining surface 40A of the second belt 40 to be fed. The component separation device 710 is disposed in an upstream, from the fourth roller 52 that winds the second belt 40 in FIG. 3, in the feed direction of the second belt 40.

The component separation device 710 has a supply part 712 that supplies pure water 711 to the joining surface 40A of the second belt 40, and a separation part 715 that is disposed in a downstream, from the supply part 712, in the feed direction of the second belt 40 and separates the plurality of electronic components 1 from the second belt 40.

The supply part 712 can include a housing 713 that houses the pure water 711 and a rotary brush 714. The rotary brush 714 includes a rotor 714A and a brush 714B formed on a peripheral surface of the rotor 714A. In this case, a rotation locus of the rotary brush 714 includes a lower rotation locus area that contacts the pure water 711 of the housing 713 and an upper rotation locus area that contacts the joining surface 40A. Note that the supply part 712 may be a nozzle or the like that injects the pure water toward the joining surface 40A. Also, as illustrated in FIG. 15, the separation part 715 can be configured by a rotary scraper 716 or the like equipped with a scraper 176B such as a rubber plate, on the peripheral surface of the rotor 176A. The electronic components 1 are scraped from the joining surface 40A by the rotary scraper 726. The separation part 715 may be an interference member in the shape of a bar, a sheet, or the like that is arranged perpendicular to the feed direction of the second belt 40, and drops the electronic components 1 downward by interfering with the electronic components 1 that are being fed.

An adhesive surface or a cohesive function of the joining surface 40A of the second belt 40 is impaired when the joining surface 40A comes into contact with water. For this reason, in the supply part 712 on the upstream side of the separation part 715, water is supplied to the joining surface 40A on which the electronic components 1 are joined. Since pure water is used as the water to be supplied and the pure water is removed due to drying, the function of the electronic components 1 is not impaired. In the separation part 715, an external force is imparted to the electronic components 1 so that the electronic components 1 are separated from the joining surface 40A. Since the external force to be imparted can be small, the electronic components 1 are not to be damaged.

### 4. Second embodiment

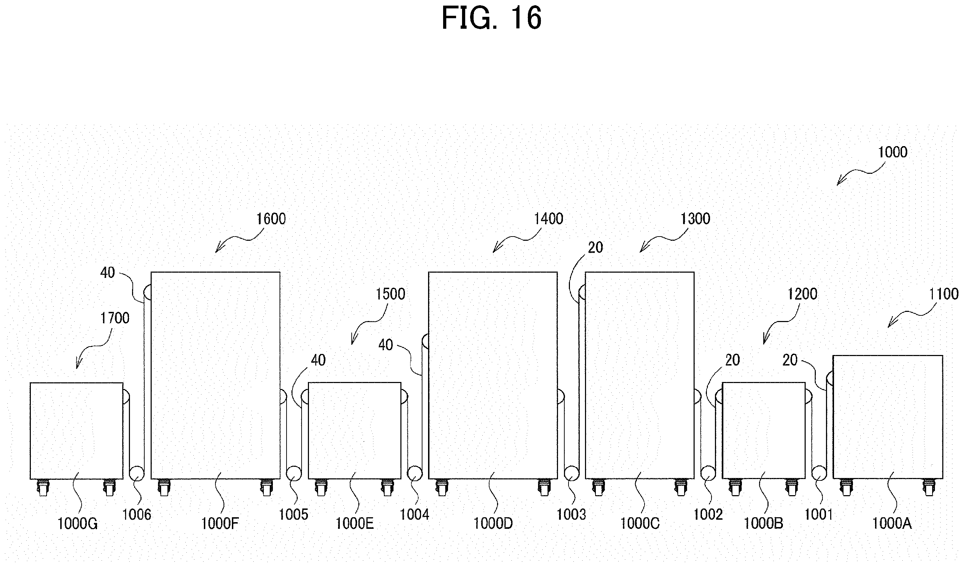

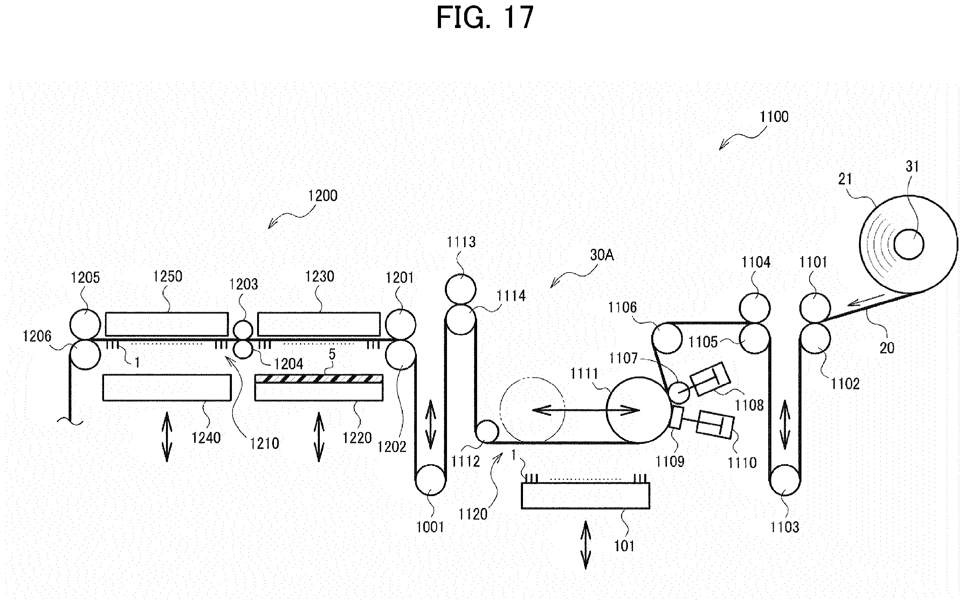

FIG. 16 illustrates a paste coating apparatus 1000 according to a second embodiment of the invention. FIGS. 17 to 19 illustrate respective parts arranged in the paste coating apparatus 1000. The paste coating apparatus 1000 includes a mounter 1100, a first coater 1200, a first dryer 1300, a transfer device 1400, a second coater 1500, a second dryer 1600, and a collection device 1700. The respective parts 1100 to 1700 illustrated in FIG. 16 have the same functions as those of the respective parts 100 to 700 illustrated in FIG. 3. Hereinafter, among the members illustrated in FIGS. 16 to 19, the members having the same functions as those of the members illustrated in FIG. 3 are given the same signs as those in FIG. 3, and the detailed descriptions thereof will be omitted. As illustrated in FIG. 16, the paste coating apparatus 1000 may be unitized into a plurality of units 1000A to 1000G for the respective parts 1100 to 1700. The respective units 1000A to 1000G are coupled by at least the first belt 20 or the second belt 40. The paste coating apparatus 1000 is not limited to having seven units 1000A to 1000G, and may be unitized into five units in the same manner as the five units 11A to 11E of FIG. 3.

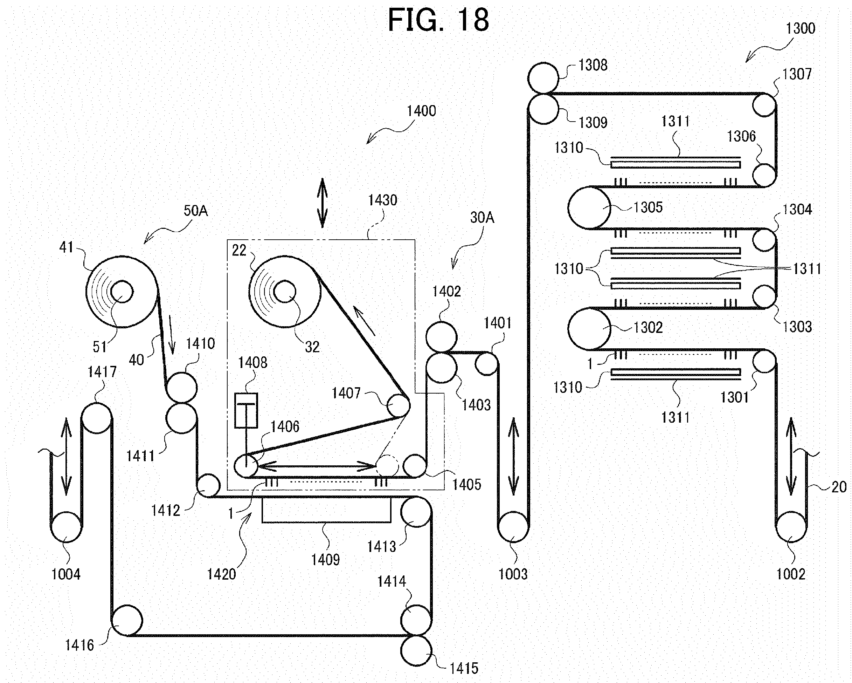

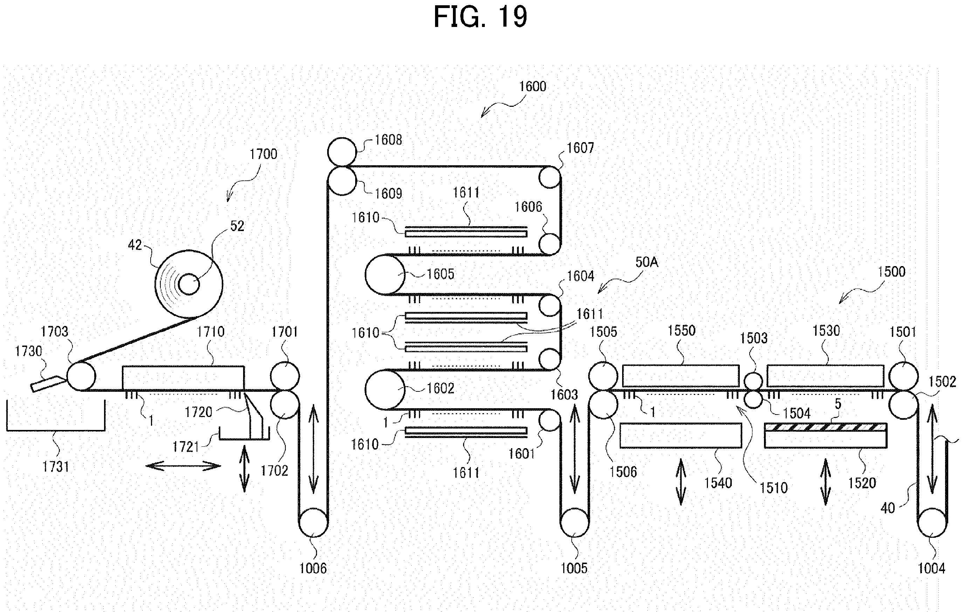

In FIG. 16, a fist feeder 30A (not illustrated in FIG. 16, refer to FIGS. 17 and 18) that feeds the first belt 20 from the first mounter 1100 to the transfer device 1400 and a second feeder 50A (not illustrated in FIG. 16, refer to FIGS. 18 and 19) that feeds the second belt 40 from the transfer device 1400 to the collection device 1700 are arranged. Here, in FIG. 16, tension rollers 1001 to 1006 that can be ascended and descended are illustrated between respective two adjacent units in the units 1000A to 1000G to facilitate comprehension of a surplus length adjusting function of the first belt 20 by the first feeder 30A and a surplus length adjusting function of the second belt 40 by the second feeder. The tension rollers 1001 to 1006 are arranged in an ascendible and descendible manner in one of the two adjacent units by an unillustrated ascending and descending mechanism. The positions of the tension rollers 1001 to 1006 are not limited to the positions between the two adjacent units. Note that rollers that implement the surplus length adjusting function of the first belt 20 are referred to as first tension rollers 1001 to 1003, and rollers that implement the surplus length adjusting function of the second belt 40 are referred to as second tension rollers 1004 to 1006. Deflection or tension of the first belt 20 or the second belt 40 caused by an asynchronous feed or an asynchronous stop of the plurality of electronic components 1 in the two adjacent units can be eliminated by an ascending and descending movement of one corresponding roller of the tension rollers 1001-1006. In FIG. 16, when one of the tension rollers 1001 to 1006 is ascended, tension can be continuously imparted even if the surplus length of the first belt 20 or the second belt 40 between the adjacent units becomes shorter. Likewise, when one of the tension rollers 1001 to 1006 is descended, tension can be continuously imparted even if the surplus length of the first belt 20 or the second belt 40 between the adjacent units becomes longer. This enables, for example, an intermittent feed in the first coater 1200 and a successive feed in the first dryer 1300 because the ascending and descending movement of the tension roller 1002 arranged between the first coater 1200 and the first dryer 1300 allows the first belt 20 to be stored without being deflected.

As illustrated in FIGS. 17 to 19, the paste coating apparatus 1000 has the first feeder 30A that feeds the first belt 20, for example, by the roll-to-roll method in the same manner as the first embodiment, and the second feeder 50A that feeds the second belt 40, for example, by the roll-to-roll method. As illustrated in FIGS. 17 to 19, the paste coating apparatus 1000 can include the first roller 31, the second roller 32, the third roller 51, and the fourth roller 52. The first or the second belt 20, 40 wound on the first to fourth rollers 31, 32, 51, 52 is referred to as the first to fourth rolls 21, 22, 41, 42.

### 4.1 Mounter

As the first feeder 30A of the first belt 20, rollers 1101 to 1106, 1112 to 1114 are arranged, in addition to the first roller 31, in the mounter 1100 illustrated in FIG. 17. Of these rollers, for example, the rollers 1101, 1104, 1113 are driving rollers. The roller 1101 is intermittently driven, which sequentially feeds the first belt 20 from the first roll 21. The roller 1104 can be rotated, for example, in forward and backward directions, and when the roller 1104 is rotated in the backward direction and the roller 1113 is rotated in the forward direction after the first belt 20 is stopped on a straight conveying channel 1120, tension is imparted to the first belt 20 on the straight conveying channel 1120. Below the straight conveying channel 1120 of the first belt 20, the jig 101 that holds the electronic components 1 for one batch in an upward direction is disposed in an ascendible and descendible manner. Above the straight conveying channel 1120 of the first belt 20, a levelling roller 1111 is arranged. The levelling roller 1111 horizontally moves while rotating, thereby promoting the joining between the electronic components 1 for one batch and the first belt 20. In place of the levelling roller 1111, the vacuum-suck part 102 of FIG. 3 may be arranged. The roller 1103 is a tension roller that can be ascended and descended. An ascending and descending position of the tension roller 1103 is adjusted such that deflection does not occur in the first belt 20 drawn from the first roll 21 by the roller 1101 while the first belt 20 is stopped during a mounting operation by the jig 101 and the levelling roller 1111. The first belt 20 on which the electronic components 1 for one batch are mounted is fed forward by intermittent drive of the rollers 1104, 1113.

The first belt 20 is repeatedly reused. To this end, a cleaning roller 1107 that cleans the first belt 20 to be reused can be arranged. The cleaning roller 1107 is driven to move forward or backward, for example, by an air cylinder 1108. Air cushion is imparted, by the air cylinder 1108, to the cleaning roller 1107 that is moved forward to be in contact with the first belt 20. A joining apparatus 1109 that is joined to the first belt 20 is arranged so as to check a joining force of the first belt 20 to be reused. The joining apparatus 1109 is driven to move forward or backward, for example, by the air cylinder 1110, and the joining force of the first belt 20 is determined by checking a force to separate the joining apparatus 1109 from the first belt 20 at a time of backward drive. Warning is issued when the joining force of the first belt 20 is determined to be insufficient, and the operation of the apparatus is stopped.

### 4.2 First coater

As the first feeder 30A of the first belt 20, rollers 1201 to 1206 are arranged in the first coater 1200 illustrated in FIG. 17. Of these rollers, for example, the rollers 1201, 1205 are driving rollers and intermittently driven. Also, as the first feeder 30A of the first belt 20, the first tension roller 1001 that can be ascended and descended is arranged between the rollers 1113, 1201. When there is an asynchronous feed or stop operation of the first belt 20 in the mounter 1100 and the first coater 1200, the first tension roller 1001 is ascended or descended to impart tension to the first belt 20.

The roller 1201 can be rotate, for example, in forward and backward directions, and tension is imparted to the first belt 20 on the straight conveying channel 1210 when the roller 1201 is rotated in the backward direction and the roller 1205 is rotated in the forward direction after the first belt 20 is stopped on the straight conveying channel 1210. Below the straight conveying channel 1210 of the first belt 20, a first surface plate 1220 is disposed in an ascendible and descendible manner on the upstream side in the feed direction of the first belt 20, and a second surface plate 1240 is disposed on the downstream side therein. A first suction part 1250 is arranged above the first surface plate 1220 across the first belt 20, and a second suction part 1250 is arranged above the second surface plate 1240 across the first belt 20. A dip layer 5 of the conductive paste is formed on a flat surface of the first surface plate 1220. When the first surface plate 1220 is ascended, the conductive paste layer is coated on the electronic components 1 for one batch. The conductive paste layer in which the conductive paste layer is coated on the electronic components 1 for one batch after intermittent conveyance of the first belt 20 is brought to contact with a flat surface of the second surface plate 1240 that is being ascended. A film thickness and evenness of the conductive paste layer coated on the electronic components 1 are thereby adjusted.

### 4.3 First dryer

As the first feeder 30A of the first belt 20, rollers 1301 to 1309 are arranged in the first dryer 1300 illustrated in FIG. 18. Of these rollers, for example, the roller 1308 is a driving roller and is continuously driven, for example. Also, as the first feeder 30A of the first belt 20, the first tension roller 1002 that can be ascended and descended is arranged between the rollers 1206, 1301. When there is an asynchronous feed or stop operation of the first belt 20 in the first coater 1200 and the first dryer 1300, the first tension roller 1002 is ascended or descended to impart tension to the first belt 20.

In the first dryer 1300, a redundant conveying channel is formed by the rollers 1301 to 1309, and heaters, for example, infrared heaters 1310 are disposed, for example, on four straight conveying channels. Reflectors 1311 are disposed on the back of the infrared heaters 1310 and enhance heating efficiency of the conductive paste layer formed on the electronic component 1. For example, when the roller 1308 is continuously driven, the first belt 20 is continuously fed in the first dryer 1300. Thus, continuous conveyance allows a heating irregularity to be reduced compared with intermittent conveyance. Also, by adjusting an ascending and descending position of the first tension roller 1002, tension is continuously imparted, without generating deflection, to the first belt 20 that is continuously conveyed in the first dryer 1300 and intermittently conveyed in the first coater 1200 that is upstream thereof.

### 4.4 Transfer device

As the first feeder 30A of first belt 20, rollers 1401 to 1309 are arranged, in addition to the second roller 32, in the transfer device 1400 illustrated in FIG. 18. Of these rollers, for example, the rollers 32, 1402 are driving rollers and intermittently driven, for example. Also, as the first feeder 30A of the first belt 20, the first tension roller 1003 that can be ascended and descended is arranged between the rollers 1309, 1401. When there is an asynchronous feed or stop operation of the first belt 20 in the first dryer 1300 and the transfer device 1400, the first tension roller 1003 is ascended or descended to impart tension to the first belt 20.

As the second feeder 50A of the second belt 40, rollers 1410 to 1417 are arranged, in addition to the third roller 51, in the transfer device 1400 illustrated in FIG. 18. Of these rollers, for example, the rollers 1410, 1414, 1417 are driving rollers and are intermittently driven, for example.

As illustrated in FIG. 18, a suction part 1409 is arranged below a straight conveying channel 1420 of the second belt 40. The roller 32, rollers 1405 to 1407, and an air cylinder 1408 can be gone up and down along the straight conveying channel 1420 integrally as an elevator 1430. In FIG. 18, the elevator 1430 is in a position of going up. When the elevator 1430 is gone down, the end portions of the electronic components 1 for one batch joined on the first belt 20 come into contact with the second belt 40 that is being vacuum-sucked by the suction part 1409. Subsequently, a release guide 1406 (a release guide or a feed direction changing guide) that guides the first belt 20 is horizontally moved in the same manner as the release guide 450 of FIGS. 8, 10, and 11 in such a manner as to release the first belt 20 at an acute angle from the electronic components 1 for one batch joined to the second belt 40. Thereby, in the same manner as the operation of the release guide 450 of FIGS. 8, 10, and 11, the electronic components 1 for one batch can be transferred from the first belt 20 to the second belt 40. In this case, transfer is made easier if a joining force of the second belt 40 is made higher than a joining force of the first belt 20. Note that the air cylinder 1408 imparts an air cushion force to the release guiding roller 1406. 4.5 Second coater

The second coater 1500 illustrated in FIG. 19 can be configured in the same manner as the first coater 1200 illustrated in Fig. 17. As the second feeder 50A of the second belt 40, rollers 1501 to 1506 are arranged in the second coater 1500. Of these rollers, for example, the rollers 1501, 1505 are driving rollers and are intermittently driven. Also, as the first feeder 30A of the second belt 40, the second tension roller 1004 that can be ascended and descended is arranged between the rollers 1419, 1501. When there is an asynchronous feed or stop operation of the second belt 40 in the transfer device 1400 and the second coater 1500, the second tension roller 1004 is ascended or descended to impart tension to the second belt 40.

Below a straight conveying channel 1510 of the second belt 4, a first surface plate 1520 is disposed in an ascendible and descendible manner at the upstream side in the feed direction of the second belt 40, and a second surface plate 1540 is disposed in an ascendible and descendible manner at the downstream side therein. A first suction part 1530 is arranged above the first surface plate 1520 across the second belt 40, and a second suction part 1550 is arranged above the second surface plate 1540 across the second belt 40. The dip layer 5 of the conductive paste is formed on a flat surface of the first surface plate 1520. When the first surface plate 1520 is ascended, the conductive paste layer is coated on the electronic components 1 for one batch. The conductive paste layer in which the conductive paste layer is coated on the electronic components 1 for one batch is brought into contact with a flat surface of the second surface plate 1540 that is ascended after intermittent conveyance of the second belt 40. A film thickness and evenness of the conductive paste layer coated on the electronic components 1 are thereby adjusted.

### 4.6 Second dryer

The second dryer 1600 illustrated in FIG. 19 can be configured in the same manner as the first dryer 1300 illustrated in FIG. 18. As the second feeder 50A of the second belt 40, rollers 1601 to 1609 are arranged in the second dryer 1600. Of these rollers, for example, the roller 1608 is a driving roller and is continuously driven, for example. Also, as the second feeder 50A of the second belt 40, the second tension roller 1005 that can be ascended and descended is arranged between the rollers 1506, 1601. When there is an asynchronous feed or stop operation of the second belt 40 in the second coater 1500 and the second dryer 1600, the second tension roller 1005 is ascended or descended to impart tension to the second belt 40.

In the second dryer 1600, a redundant conveying channel is formed by the rollers 1601 to 1609, and heaters, for example, infrared heaters 1610 are disposed, for example, on four straight conveying channels. Reflectors 1611 are disposed on the back of the infrared heaters 1610 and enhance heating efficiency of the conductive paste layer formed on the electronic component 1. For example, when the roller 1608 is continuously driven, the second belt 40 is continuously fed in the second dryer 1600. Also, by adjusting an ascending and descending position of the second tension roller 1005, tension is continuously imparted, without generating deflection, to the second belt 40 that is continuously conveyed in the second dryer 1600 and intermittently conveyed in the second coater 1500 that is upstream thereof.

### 4.7 Collection device

As the second feeder 50A of the second belt 40, rollers 1701 to 1703 are arranged, in addition to the fourth roller 52, in the collection device 1700 illustrated in FIG. 19. Of these rollers, for example, the rollers 52, 1701 are driving rollers and are intermittently driven, for example. Also, as the second feeder 50A of the second belt 40, the second tension roller 1006 that can be ascended and descended is arranged between the rollers 1609, 1701. When there is an asynchronous feed or stop operation of the second belt 40 in the second dryer 1600 and the collection device 1700, the second tension roller 1006 is ascended or descended to impart tension to the second belt 40.

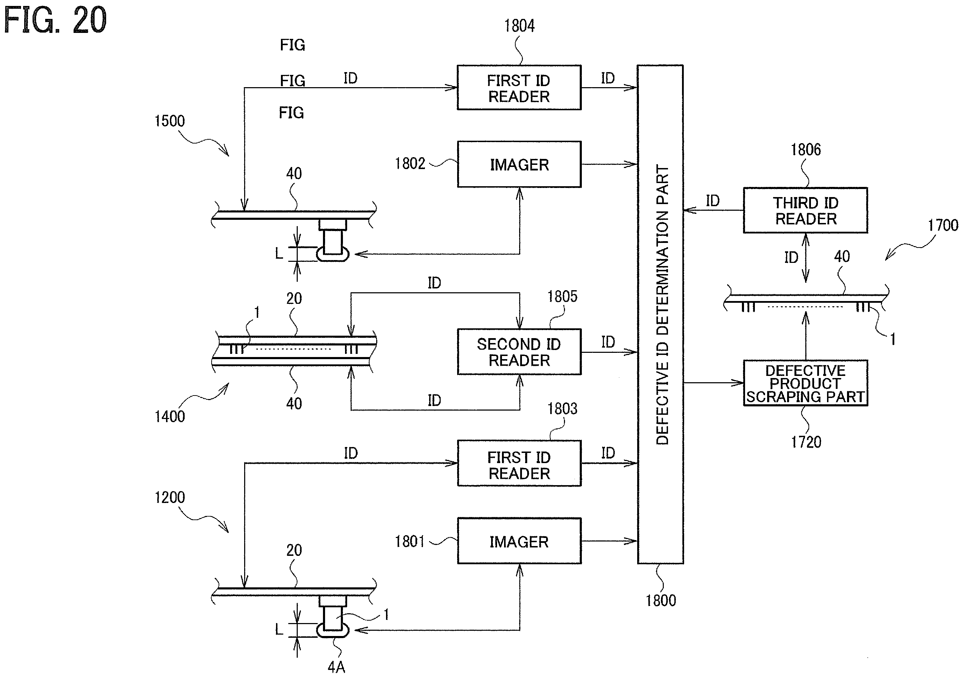

As component collection device, a defective product collection part 1721 and a good product collection part 1731 can be arranged in the collection device 1700. The defective product collection part 1721 is integral with a defective product scraping part 1720, and is ascended/descended and horizontally moved. Whether the electronic component 1 is a defective product or not is determined by a defective ID determination part 1800 of a control system block illustrated in FIG. 20. In the present embodiment, a determination is made, for example, on the basis of a state of the conductive paste layer 4A coated on at least one of both end portions of at least one electronic component 1. To this end, as illustrated in FIG. 20, imagers 1801, 1802 such as cameras can be disposed, for example, in the first coater 1200 and the second coater 1500. In the imagers 1801, 1802 illustrated in FIG. 20, a length L that is a size of the conductive paste layer 4A illustrated in FIG. 2 and obtained by T1 + L3 is imaged, for example. In the defective ID determination part 1800, if the imaged size L is within a prescribed range, the product can be determined as a good product, and if the imaged size L is not within the prescribed range, the product is determined as a defective product. Also, batch IDs (for example, bar codes) are given to the first belt 20 and the second belt 40 for each jointing area of the electronic components 1 for one batch. First ID readers 1803, 1804 illustrated in FIG. 20 read batch IDs given to the first belt 20 and the second belt 40 for the respective electronic components 1 for one batch imaged by the imagers 1801, 1802. Also, with respect to which batch ID of the first belt 20 corresponds to which batch ID of the second belt 40, two batch IDs of the first and second belts 20, 40 that, for example, correspond to each other in the transfer device 1400 are read by the second ID reader 1805 illustrated in FIG. 20.

Therefore, whether a coating failure has occurred or not in at least one of the first coater 1200 and the second coater 1500 can be recognized by reading the batch ID of the second belt 40 in the collection device 1700 with a third ID reader 1806 illustrated in FIG. 20. The electronic components 1 for one batch determined to be defective are scraped by the defective product scraping part 1720 and collected by the defective product collection part 1721. The remaining electronic components 1 that are good products are scraped by the good product scraping part 1730 and collected by the good product collection part 1731. The second belt 40 from which the electronic components 1 have been scraped is collected as the fourth roll 42 by the fourth roller 52.

In the second embodiment described above, the members may be replaced with the members of the first embodiment illustrated in FIGS. 1 to 15. For example, in at least one of the first, second coaters 1200, 1500, the rotor 210 illustrated in FIGS. 5 to 7 may be used in place of the first and second surface plate. Also, in at least one of the first and second dryers 1300, 1600, the belt conveyance mechanism 330 illustrated in FIGS. 12 to 14 can be used.

### REFERENCE SIGNS LIST

- 1: Electronic component
- 2, 2a, 2b: End portions
- 2A: End face
- 2B: Side face
- 2C: Corner portion
- 4: Conductive paste layer before completion of drying process
- 4A: Electrode (Conductive paste layer after completion of drying process)
- 5: Dip layer
- 10: Paste coating apparatus
- 10A: First device
- 10B: Second device
- 11A: Mounting unit
- 11B: First coating unit
- 11C: Drying unit
- 11D: Transfer/collection unit
- 11E: Second coating unit
- 20: First belt
- 20A: Joining surface
- 20B: Non-joining surface
- 21: First roll
- 22: Second roll
- 30, 30A: First feeders
- 31: First roller
- 32: Second roller
- 40: Second belt
- 40A: Joining surface
- 40B: Non-joining surface
- 41: Third roll
- 42: Fourth roll
- 50, 50A: Second feeders
- 51: Third roller
- 52: Fourth roller
- 100: Mounter
- 101: Jig
- 102: Base
- 200: First coater
- 210: Rotor
- 211: Flat surface
- 220: Dip layer forming apparatus
- 221: Paste housing
- 221B: Opening
- 222: Feed roller
- 224: Blade
- 230: Rotation driver
- 240: Moving apparatus (First moving apparatus)
- 250: Remover (Blade)
- 300: First dryer
- 310: Drying chamber
- 320: Meandering conveying channel
- 330: Belt conveyance mechanism
- 331A: Pair of first endless belts
- 331A1: First guiding rib
- 331B: Pair of second endless belts
- 331B1: Second guiding rib
- 332A: First driving roller
- 332A1: First peripheral groove
- 332B: Second driving roller
- 332B1: Second peripheral groove
- 334: Guide roller
- 400: Transfer device
- 410: First suction part
- 420: Second suction part
- 430: Third suction part
- 431: Opening
- 440: Fourth suction part
- 450: Release guide
- 460: Pressing part (Roller)
- 500: Second coater
- 600: Second dryer
- 610: Meandering conveying channel
- 700: Collection device
- 710: Electronic component separation device
- 711: Pure water
- 712: Supply part
- 713: Housing par
- 714: Rotary brush
- 714A: Rotor
- 714B: Brush
- 715: Separation part
- 716: Rotary scraper
- 716A: Rotor
- 716B: Scraper
- 1000: Paste coating apparatus
- 1000A to 1000G: Plurality of units
- 1001 to 1003: First tension rollers
- 1004 to 1006: Second tension rollers
- 1100: Mounter
- 1200: First coater
- 1220: First surface plate
- 1240: Second surface plate
- 1300: First dryer
- 1400: Transfer device
- 1500: Second coater
- 1520: First surface plate
- 1540: Second surface plate
- 1600: Second dryer
- 1700: Collection device
- 1721, 1731: Component collection parts
- 1800: Defective ID determination part
- 1801, 1802: Imagers
- 1803, 1804: First ID readers
- 1805: Second ID reader
- 1806: Third ID reader

## Claims

1. A paste coating apparatus, comprising:
a first feeder that feeds a first belt;
a mounter that joins one end portion of each of electronic components to the stopped first belt so as to mount the electronic components to the first belt;
a first coater that coats paste on the other end portion of each of the electronic components mounted on the stopped first belt;
a first dryer that dries the paste coated on the other end portion of each of the electronic components while the first belt is being fed by the first feeder;
a second feeder that feeds a second belt;
a transfer device that joints, to the second belt, the other end portion of each of the electronic components having the dried paste at the other end portion, pulls apart the one end portion of each of the electronic components from the first belt, and then transfers the electronic components from the first belt to the second belt;
a second coater that coats the paste on the one end portion of each of the electronic components mounted on the stopped second belt;
a second dryer that dries the paste coated on the one end portion of each of the electronic components while the second belt is being fed by the second feeder; and
a collection device that winds and collects the second belt.

2. The paste coating apparatus according to claim 1, comprising:
a first roll that is disposed upstream from the mounter in a first feed direction of the first belt, and on which the first belt has been wound;
a second roll that is disposed downstream from the transfer device in the first feed direction, and on which the first belt is to be wound;
a third roll that is disposed upstream from the transfer device in a second feed direction of the second belt, and on which the second belt has been wound; and
a fourth roll that is disposed in the collection device, and on which the second belt is to be wound.

3. The paste coating apparatus according to claim 2, wherein the first dryer includes:
a pair of first endless belts that touches a first surface of the first belt at both end portions in a width direction of the first belt;
a pair of second endless belts that touches a second surface of the first belt at both end portions in the width direction of the first belt;
at least one first driving roller that rotatably contacts the pair of first endless belts; and
at least one second driving roller that rotatably contacts the pair of second endless belts,
and wherein the first belt is fed with both end portions of the first belt being sandwiched by the pair of first endless belts and the pair of second endless belts.

4. The paste coating apparatus according to any one of claims 1 to 3, wherein the paste coating apparatus is configured by displacing units including a mounting unit in which the mounter is displaced, a first coating unit in which the first coater is displaced, a first drying unit in which the first dryer is displaced, a transfer unit in which the transfer device is displaced, a second coating unit in which the second coater is displaced, a second drying unit in which the second dryer is displaced, and a collection unit in which the collection device is displaced, in the above order.

5. The paste coating apparatus according to claim 4, wherein:
the first feeder includes a first tension roller that is ascended and descended in one of respective two units of the units, the two units are disposed adjacently upstream and downstream in the first feed direction of the first belt; and
the second feeder includes a second tension roller that is ascended and descended in one of respective two units, of the units, that are disposed adjacently upstream and downstream in the second feed direction of the second belt.

6. The paste coating apparatus according to any one of claims 1 to 5, wherein at least one of the first dryer and the second dryer includes a meandering conveying channel that meanders and conveys at least one of the first belt and the second belt by changing the feed direction thereof by rollers.

7. The paste coating apparatus according to any one of claims 1 to 6, wherein at least one of the first coater and the second coater moves a dip layer of the paste formed on a flat surface arranged on a surface plate relatively toward the electronic components.

8. The paste coating apparatus according to claim 7, wherein at least one of the first coater and the second coater brings the flat surface into contact with the paste formed on the electronic components by moving the flat surface relatively toward the electronic components so as to flatten the paste.

9. The paste coating apparatus according to any one of claims 1 to 8, wherein the transfer device includes:
a suction part that disposes the electronic components between opposing surfaces of the first belt and the second belt so as to suck a different surface from the opposing surface of the second belt;
a moving apparatus that moves at least one of the first belt and the second belt toward another one so as to join the electronic components to the second belt; and
a release guide that guides the first belt in such a manner as to release the first belt, which is fed by the first feeder, from the electronic components jointed to the second belt.

10. The paste coating apparatus according to claim 9, wherein the release guide includes a feed direction changing guide that changes the feed direction of the first belt at an acute angle.

11. The paste coating apparatus according to claim 9 or 10, wherein a joining force of the second belt is larger than a joining force of the first belt.

12. The paste coating apparatus according to any one of claims 1 to 11, wherein:
the electronic components concurrently mounted on the first belt in the mounter are electronic components for one batch; and
different batch IDs are given to the first belt and the second belt by a unit of the electronic components for one batch.

13. The paste coating apparatus according to claim 12, comprising:
an imager that images at least one of the electronic components for one batch jointed to the first belt and/or the second belt;
a first ID reader that reads a batch ID of a batch to which the electronic component imaged by the imager belongs; and
a second ID reader that reads a batch ID of each of the first belt and the second belt that are disposed on the transfer device and on which the electronic components for one batch are transferred.

14. The paste coating apparatus according to claim 13, wherein the collection device includes:
a third ID reader that reads the batch ID given to the second belt; and
a component collection part that classifies the electronic components for one batch, which are separated from the second belt and have been determined good or defective on the basis of the imaging results in the imager, into good products or defective products on the basis of the batch ID read by the third ID reader.

15. A paste coating apparatus, comprising:
a feeder that feeds a belt;
a mounter that joins one end portion of each of electronic components to the stopped belt so as to mount the electronic components on the belt;
a coater that coats paste on the other end portion of each of the electronic components by moving a dip layer of the paste formed on a surface plate relatively to the electronic components mounted on the stopped belt; and
a dryer that dries the paste material coated on the other end portion of each of the electronic components while the belt is being fed by the feeder.
